# EUROPEAN PATENT APPLICATION

(11) **EP 4 657 198 A1**
(43) Date of publication of application: **03.12.2025**
(21) Application number: 25176016.1
(22) Date of filing: 13.05.2025
(51) Int. Cl.: G05D 1/81, G01C 23/00, G05D 105/22, G05D 107/13, G05D 109/22, G08G 5/55

(54) **AUTOLAND RECOVERY METHODS AND SYSTEMS**

(30) Priority: 27.05.2024 IN 202411041010; 14.08.2024 US 202418804758
(71) Applicant: Honeywell International Inc., Charlotte, NC 28202 (US)
(72) Inventor: T, Prem Kumar, Charlotte, 28202 (US); MOHIDEEN, Mohammed Ibrahim, Charlotte, 28202 (US); VELAPPAN, Kalaiarasu, Charlotte, 28202 (US); RN, Gireesh Kumar, Charlotte, 28202 (US); THIYAGARAJAN, Janakiram, Charlotte, 28202 (US); V, Karthic, Charlotte, 28202 (US)
(74) Representative: Ingrassia, Fisher & Lorenz UK Ltd.

(57) **Abstract**

Systems and methods are provided for assisting operation of a vehicle in response to deactivation of an automated functionality. One method involves automatically recording, in response to activation of the automated functionality, vehicle status data from one or more systems onboard the vehicle during operation of the vehicle in accordance with the automated functionality in a time ordered sequence and automatically generating an automation summary graphical user interface (GUI) display comprising the time ordered sequence of the vehicle status data in response to deactivation of the automated functionality.

## Description

### CROSS-REFERENCE TO RELATED APPLICATION

This application claims priority to India Provisional Patent Application No. 202411041010, filed May 27, 2024, the entire content of which is incorporated by reference herein.

### TECHNICAL FIELD

The subject matter described herein relates generally to vehicle systems, and more particularly, embodiments of the subject matter relate to assisting a pilot or other vehicle operator resuming operation after activation of an automated functionality.

### BACKGROUND

Various forms of automation have been incorporated into vehicles to improve operations and reduce stress, fatigue, and other potential contributing factors for human error. For example, many modern aircraft incorporate a flight management system (FMS) and other avionics systems capable of providing autopilot functionality and other automated vehicle operations.

In some situations, a pilot or other vehicle operator may become distracted, incapacitated or otherwise impaired with respect to his or her ability to operate the vehicle (e.g., due to workload, sleep or drowsiness, loss of situational awareness, health emergencies, etc.). Accordingly, systems have been developed to autonomously operate aircraft in a manner that mitigates potential pilot incapacity or other inability to fully operate the aircraft. For example, U.S. Patent Publication No. 2021/0287560 describes flight guidance systems capable of providing assist-to-land and emergency landing functions for aircraft. In practice, the incapacity or unavailability of the pilot may only be temporary, such that pilot or other operator may disarm or otherwise disable an automated functionality that was previously activated to resume manual control of the aircraft. Accordingly, it is desirable to improve situational awareness and reduce the workload on the pilot resuming operation of an aircraft after activation of automated functionality. Other desirable features and characteristics will become apparent from the subsequent detailed description and the appended claims, taken in conjunction with the accompanying drawings and this background.

### BRIEF SUMMARY

Systems and methods are provided for assisting operation of a vehicle in response to activation and subsequent deactivation of an automated functionality, such as an autoland functionality of an aircraft. One exemplary method involves automatically recording vehicle status data from one or more systems onboard the vehicle during operation of the vehicle in accordance with an automated functionality in a time ordered sequence for a period of time after the activation of the automated functionality in response to activation of the automated functionality associated with the vehicle, and in response to deactivation of the automated functionality, automatically generating an automation summary graphical user interface (GUI) display including the time ordered sequence of the vehicle status data.

An apparatus for a computer-readable medium is also provided. The computer-readable medium has computer-executable instructions stored thereon that, when executed by a processing system, are configurable to cause the processing system to automatically record vehicle status data from one or more systems onboard a vehicle during operation of the vehicle in accordance with an automated functionality associated with the vehicle in response to activation of the automated functionality, resulting in recorded vehicle status data in a time ordered sequence for a period of time after the activation of the automated functionality, and automatically generate an automation summary GUI display including the time ordered sequence of the recorded vehicle status data in response to deactivation of the automated functionality.

An aircraft system is also provided that includes a flight management system (FMS) to provide autoland functionality for an aircraft, one or more systems onboard the aircraft to provide status data associated with the aircraft, a display device, and a processing system coupled to the display device, the FMS and the one or more systems. The processing system is configurable to provide an automation summarization service that automatically records the status data from the one or more systems onboard the aircraft during operation of the aircraft in accordance with the autoland functionality in a time ordered sequence for a period of time after activation of the autoland functionality in response to the activation of the autoland functionality and automatically generates an automation summary GUI display on the display device in response to deactivation of the autoland functionality, wherein the automation summary GUI display comprises a graphical indication of one or more automation events corresponding to the time ordered sequence of the status data.

This summary is provided to describe select concepts in a simplified form that are further described in the Detailed Description. This summary is not intended to identify key or essential features of the claimed subject matter, nor is it intended to be used as an aid in determining the scope of the claimed subject matter.

### BRIEF DESCRIPTION OF DRAWINGS

Exemplary embodiments of the subject matter of the present disclosure will hereinafter be described in conjunction with the following drawing figures, wherein like numerals denote like elements, and wherein:
FIG. 1 is a block diagram of a system for an aircraft in accordance with one or more exemplary embodiments;
FIG. 2 is a flow diagram of an automation recording process suitable for implementation in connection with the aircraft system of FIG. 1 in one or more exemplary embodiments;
FIG. 3 is a flow diagram of an automation summarization process suitable for implementation in connection with the automation recording process of FIG. 2 in the aircraft system of FIG. 1 in one or more exemplary embodiments; and
FIGS. 4-5 depict exemplary automation summary graphical user interface (GUI) displays suitable for presentation in connection with one or more exemplary implementations of the automation summarization process of FIG. 3.

### DETAILED DESCRIPTION

The following detailed description is merely exemplary in nature and is not intended to limit the subject matter of the application and uses thereof. Furthermore, there is no intention to be bound by any expressed or implied theory presented in the preceding technical field, background, brief summary, or the following detailed description.

Embodiments of the subject matter described herein relate to systems and methods for assisting a vehicle operator resuming operation of a vehicle by providing an automation summary graphical user interface (GUI) display in response to deactivation of the automated functionality. In this regard, the automation summary GUI display depicts or otherwise includes a time ordered sequence of vehicle status date automatically recorded from one or more onboard systems during operation of the vehicle in accordance with the automated functionality to capture events associated with the automated functionality or other changes to the vehicle state resulting from the automated functionality. In this manner, the automation summary GUI display provides situational awareness with respect to prior past actions by the automated functionality and how the vehicle state has changed or otherwise deviated during the period of time over which the automated functionality was activated. For purposes of explanation, the subject matter is described herein primarily in the context of assisting a pilot, copilot or other aircraft operator in response to deactivation of an autoland functionality that provides fully autonomous and automatic configuration of the aircraft for landing, such as any one of the auto land functions or emergency land functions described in U.S. Patent Publication No. 2021/0287560. That said, it should be appreciated the subject matter is not necessarily limited to use with aircraft or any other particular type of vehicle, system or application, and may be similarly utilized in other applications, systems or environments, including, but not limited to use with other types of vehicles (e.g., automobiles, marine vessels, trains, etc.).

In practice, the autoland functionality associated with an aircraft (or a flight management system (FMS) or other flight guidance system thereof) may be automatically activated in response to detecting a potential incapacity condition. For example, as described in U.S. Patent Pub. No. 2023/0297123, different physiological states or characteristics of a pilot or other aircraft operator may be monitored using various different sensing devices onboard the aircraft (e.g., cameras, physiological sensors, and/or the like) to detect an incapacity condition and automatically initiate the autoland functionality in response to the incapacity condition. However, in practice, the incapacity condition may be of a limited or temporary duration, such as, for example, a pilot falling asleep or fainting, such that the pilot is capable of subsequently resuming operation of the aircraft after activation of the autoland functionality. In such scenarios, the autoland functionality may be automatically deactivated based on measurement data from the different onboard sensing devices indicating the pilot is no longer incapacitated. However, when the autoland functionality is deactivated, the pilot may be disoriented or otherwise lack situational awareness with respect to the current operating state of the aircraft relative to the initial operating state at or before the time of the incapacity condition. Accordingly, the automation summary GUI display provides graphical indicia of the events, actions or other changes that occurred with respect to the aircraft state during the duration of the incapacity condition or while the autoland functionality was otherwise active in a time ordered sequence.

Depending on the implementation, the automation summary GUI display may include graphical indicia of the detected incapacity condition or other triggering event associated with activation of the autoland functionality, the prior aircraft state associated with the activation of the autoland functionality (e.g., geographic location, altitude, speed, configuration, etc. at the time of the autoland activation). Additionally, or alternatively, the automation summary GUI display may also include graphical indicia of the navigational reference point(s) traversed by the aircraft during activation of the autoland functionality or other graphical indicia of the difference between a modified route for the aircraft associated with the autoland functionality and a planned route for the aircraft prior to activation of the autoland functionality, so that the pilot can achieve situational awareness or better ascertain how the aircraft was flown by the autoland functionality. In exemplary implementations, the automation summary GUI display also includes graphical indicia of any performance limitations associated with the aircraft at the time of deactivation of the autoland functionality to provide the pilot with situational awareness with respect to potential operation of the aircraft that is no longer viable. For example, based on the current location, altitude, speed and/or the like associated with the aircraft at the time of autoland deactivation, an inability of the aircraft to return to the originally planned destination or otherwise rejoin or return to the flight path according to the original flight plan may be determined and conveyed to the pilot via the automation summary GUI display. In this manner, automation summary GUI display may reduce pilot workload and simplify decision making by eliminating potential courses of action that are no longer viable given the current aircraft state at the time of deactivation of the autoland functionality.

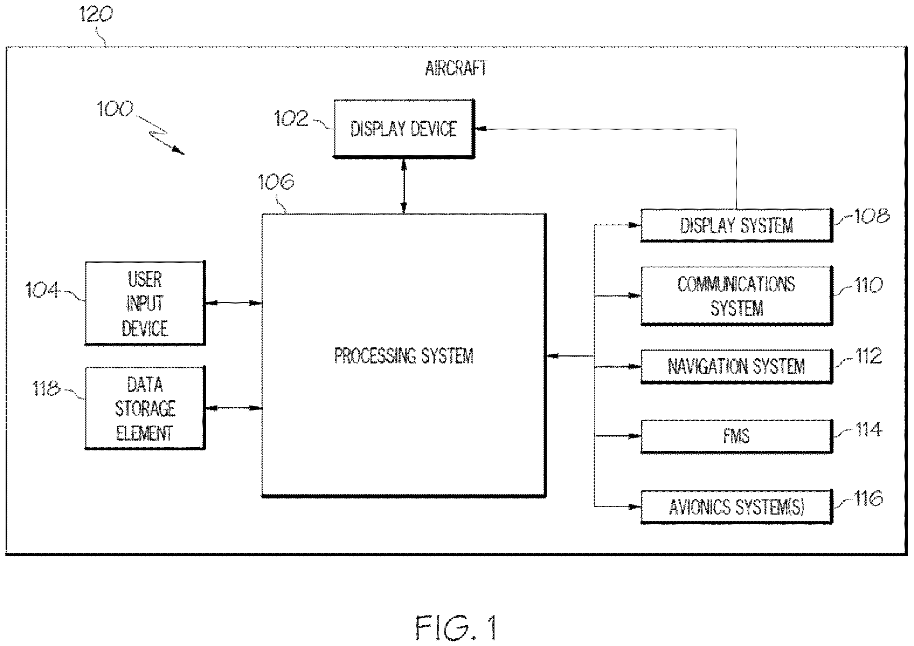

FIG. 1 depicts an exemplary embodiment of an aircraft system 100 which may be utilized with an aircraft 120 to implement the subject matter described herein. In an exemplary embodiment, the system 100 includes, without limitation, a display device 102, one or more user input devices 104, a processing system 106, a display system 108, a communications system 110, a navigation system 112, a flight management system (FMS) 114, one or more avionics systems 116, and a data storage element 118 suitably configured to support operation of the system 100, as described in greater detail below.

In exemplary embodiments, the display device 102 is realized as an electronic display capable of graphically displaying flight information or other data associated with operation of the aircraft 120 under control of the display system 108 and/or processing system 106. In this regard, the display device 102 is coupled to the display system 108 and the processing system 106, and the processing system 106 and the display system 108 are cooperatively configured to display, render, or otherwise convey one or more graphical representations or images associated with operation of the aircraft 120 on the display device 102. The user input device 104 is coupled to the processing system 106, and the user input device 104 and the processing system 106 are cooperatively configured to allow a user (e.g., a pilot, co-pilot, or crew member) to interact with the display device 102 and/or other elements of the system 100, as described in greater detail below. Depending on the embodiment, the user input device(s) 104 may be realized as a keypad, touchpad, keyboard, mouse, touch panel (or touchscreen), joystick, knob, line select key or another suitable device adapted to receive input from a user. In some exemplary embodiments, the user input device 104 includes or is realized as an audio input device, such as a microphone, audio transducer, audio sensor, or the like, which is adapted to allow a user to provide audio input to the system 100 in a "hands free" manner using speech recognition.

The processing system 106 generally represents the hardware, software, and/or firmware components configured to facilitate communications and/or interaction between the elements of the system 100 and perform additional tasks and/or functions to support operation of the system 100, as described in greater detail below. Depending on the embodiment, the processing system 106 may be implemented or realized with a general purpose processor, a content addressable memory, a digital signal processor, an application specific integrated circuit, a field programmable gate array, any suitable programmable logic device, discrete gate or transistor logic, processing core, discrete hardware components, or any combination thereof, designed to perform the functions described herein. The processing system 106 may also be implemented as a combination of computing devices, e.g., a plurality of processing cores, a combination of a digital signal processor and a microprocessor, a plurality of microprocessors, one or more microprocessors in conjunction with a digital signal processor core, or any other such configuration. In practice, the processing system 106 includes processing logic that may be configured to carry out the functions, techniques, and processing tasks associated with the operation of the system 100, as described in greater detail below. Furthermore, the steps of a method or algorithm described in connection with the embodiments disclosed herein may be embodied directly in hardware, in firmware, in a software module executed by the processing system 106, or in any practical combination thereof. For example, in one or more embodiments, the processing system 106 includes or otherwise accesses a data storage element (or memory), which may be realized as any sort of non-transitory short or long term storage media capable of storing programming instructions for execution by the processing system 106. The code or other computer-executable programming instructions, when read and executed by the processing system 106, cause the processing system 106 to support or otherwise perform certain tasks, operations, functions, and/or processes described herein.

The display system 108 generally represents the hardware, software, and/or firmware components configured to control the display and/or rendering of one or more navigational maps and/or other displays pertaining to operation of the aircraft 120 and/or onboard systems 110, 112, 114, 116 on the display device 102. In this regard, the display system 108 may access or include one or more databases suitably configured to support operations of the display system 108, such as, for example, a terrain database, an obstacle database, a navigational database, a geopolitical database, an airport database, a terminal airspace database, a special use airspace database, or other information for rendering and/or displaying navigational maps and/or other content on the display device 102.

In the illustrated embodiment, the aircraft system 100 includes a data storage element 118, which is capable of storing, maintaining or otherwise implementing one or more of the databases that support operations of the aircraft system 100 described herein. In some embodiments, the data storage element 118 contains aircraft procedure information (or instrument procedure information) for a plurality of airports and maintains associations between the aircraft procedure information and the corresponding airports. Depending on the embodiment, the data storage element 118 may be physically realized using RAM memory, ROM memory, flash memory, registers, a hard disk, or another suitable data storage medium known in the art or any suitable combination thereof. As used herein, aircraft procedure information should be understood as a set of operating parameters, constraints, or instructions associated with a particular aircraft action (e.g., approach, departure, arrival, climbing, and the like) that may be flown or otherwise undertaken by the aircraft 120 at or in the vicinity of a particular airport. An airport should be understood as referring to any sort of location suitable for landing (or arrival) and/or takeoff (or departure) of an aircraft, such as, for example, airports, runways, landing strips, and other suitable landing and/or departure locations, and an aircraft action should be understood as referring to an approach (or landing), an arrival, a departure (or takeoff), an ascent, taxiing, or another aircraft action having associated aircraft procedure information. An airport may have one or more predefined aircraft procedures associated therewith, wherein the aircraft procedure information for each aircraft procedure at each respective airport are maintained by the data storage element 118 in association with one another.

Depending on the embodiment, the aircraft procedure information may be provided by or otherwise obtained from a governmental or regulatory organization, such as, for example, the Federal Aviation Administration in the United States. In an exemplary embodiment, the aircraft procedure information includes instrument procedure information, such as instrument approach procedures, standard terminal arrival routes, instrument departure procedures, standard instrument departure routes, obstacle departure procedures, or the like, traditionally displayed on a published charts, such as Instrument Approach Procedure (IAP) charts, Standard Terminal Arrival (STAR) charts or Terminal Arrival Area (TAA) charts, Standard Instrument Departure (SID) routes, Departure Procedures (DP), terminal procedures, approach plates, and the like. In exemplary embodiments, the data storage element 118 maintains associations between prescribed operating parameters, constraints, and the like and respective navigational reference points (e.g., waypoints, positional fixes, radio ground stations (VORs, VORTACs, TACANs, and the like), distance measuring equipment, non-directional beacons, or the like) defining the aircraft procedure, such as, for example, altitude minima or maxima, minimum and/or maximum speed constraints, RTA constraints, and the like.

Still referring to FIG. 1, in exemplary embodiments, the processing system 106 is coupled to the navigation system 112, which is configured to provide real-time navigational data and/or information regarding operation of the aircraft 120. The navigation system 112 may be realized as a global positioning system (GPS), inertial reference system (IRS), or a radio-based navigation system (e.g., VHF omni-directional radio range (VOR) or long range aid to navigation (LORAN)), and may include one or more navigational radios or other sensors suitably configured to support operation of the navigation system 112, as will be appreciated in the art. The navigation system 112 is capable of obtaining and/or determining the instantaneous position of the aircraft 120, that is, the current (or instantaneous) location of the aircraft 120 (e.g., the current latitude and longitude) and the current (or instantaneous) altitude or above ground level for the aircraft 120. The navigation system 112 is also capable of obtaining or otherwise determining the heading of the aircraft 120 (i.e., the direction the aircraft is traveling in relative to some reference).

In the illustrated embodiment, the processing system 106 is also coupled to the communications system 110, which is configured to support communications to and/or from the aircraft 120. For example, the communications system 110 may support communications between the aircraft 120 and air traffic control or another suitable command center or ground location. In this regard, the communications system 110 may be realized using a radio communication system and/or another suitable data link system. In this regard, various embodiments of the communications system 110 include hardware and/or other components configured to support data link communications to/from the aircraft 120 using a data link infrastructure and/or a data link service provider. For example, the communications system 110 may include or otherwise be realized as a Controller Pilot Data Link Communications (CPDLC) system, an Aircraft Communication Addressing and Reporting System (ACARS) system, an Automatic Dependent Surveillance (ADS) broadcast system or another system suitable for communicating messages over a communications network, such as the Internet, a satellite network, a cellular network, or the like.

In exemplary embodiments, the processing system 106 is also coupled to the FMS 114, which is coupled to the navigation system 112, the communications system 110, and one or more additional avionics systems 116 to support navigation, flight planning, and other aircraft control functions in a conventional manner, as well as to provide real-time data and/or information regarding the operational status of the aircraft 120 to the processing system 106. Although FIG. 1 depicts a single avionics system 116, in practice, the system 100 and/or aircraft 120 will likely include numerous avionics systems for obtaining and/or providing real-time flight-related information that may be displayed on the display device 102 or otherwise provided to a user (e.g., a pilot, a co-pilot, or crew member). For example, practical embodiments of the system 100 and/or aircraft 120 will likely include one or more of the following avionics systems suitably configured to support operation of the aircraft 120: a weather system, an air traffic management system, a radar system, a traffic avoidance system, an autopilot system, an autothrust system, a flight control system, hydraulics systems, pneumatics systems, environmental systems, electrical systems, engine systems, trim systems, lighting systems, crew alerting systems, electronic checklist systems, an electronic flight bag and/or another suitable avionics system.

It should be understood that FIG. 1 is a simplified representation of the system 100 for purposes of explanation and ease of description, and FIG. 1 is not intended to limit the application or scope of the subject matter described herein in any way. It should be appreciated that although FIG. 1 shows the display device 102, the user input device 104, and the processing system 106 as being located onboard the aircraft 120 (e.g., in the cockpit), in practice, one or more of the display device 102, the user input device 104, and/or the processing system 106 may be located outside the aircraft 120 (e.g., on the ground as part of an air traffic control center or another command center) and communicatively coupled to the remaining elements of the system 100 (e.g., via a data link and/or communications system 110). Similarly, in some embodiments, the data storage element 118 may be located outside the aircraft 120 and communicatively coupled to the processing system 106 via a data link and/or communications system 110. Furthermore, practical embodiments of the system 100 and/or aircraft 120 will include numerous other devices and components for providing additional functions and features, as will be appreciated in the art. In this regard, it will be appreciated that although FIG. 1 shows a single display device 102, in practice, additional display devices may be present onboard the aircraft 120. Additionally, it should be noted that in other embodiments, features and/or functionality of processing system 106 described herein can be implemented by or otherwise integrated with the features and/or functionality provided by the FMS 114 and/or the display system 108. In other words, some embodiments may integrate the processing system 106 with the FMS 114 and/or the display system 108. In yet other embodiments, various aspects of the subject matter described herein may be implemented by or at an electronic flight bag (EFB) or similar electronic device that is communicatively coupled to the processing system 106 and/or the FMS 114.

In exemplary implementations, the FMS 114 (or another onboard avionics system 116 of the aircraft 120) is configured to automatically activate autoland functionality that results in the FMS 114 automatically generating a flight plan for autonomously operating and landing the aircraft based on the current state of the aircraft 120 identified via one or more of the onboard systems 112, 114, 116 using information maintained in one or more databases 118 that accounts for the terrain, obstacles, weather, aircraft-specific approach capabilities, runway lengths, range, on-ground weather conditions, etc. In this regard, the autoland functionality of the FMS 114 or other onboard system 116 may be configured to generate commands for leveling the aircraft 120 while the flight plan is being updated prior to actively controlling the autopilot system, the autothrust system, the flight control system or other flight guidance system to autonomously operate the aircraft 120 for landing at an airport, which may be different from a previously planned airport for landing the aircraft 120. For example, the FMS 114 may autonomously and automatically select a nearest suitable airport and an associated route thereto and then autonomously command, instruct or otherwise control the autopilot, autothrottle, or other flight control system to fly the aircraft along the route to a final approach fix before autonomously communicating with air traffic control (ATC), autonomously configuring the aircraft for landing and autonomously landing the aircraft at the selected airport, as described in U.S. Patent Pub. No. 2023/0297123. It should be appreciated that the subject matter described herein is not limited to any particular scheme or manner for activating the autoland functionality or other automated functionality associated with the aircraft 120, or otherwise limited to any particular algorithm or scheme for implementing the respective automated functionality.

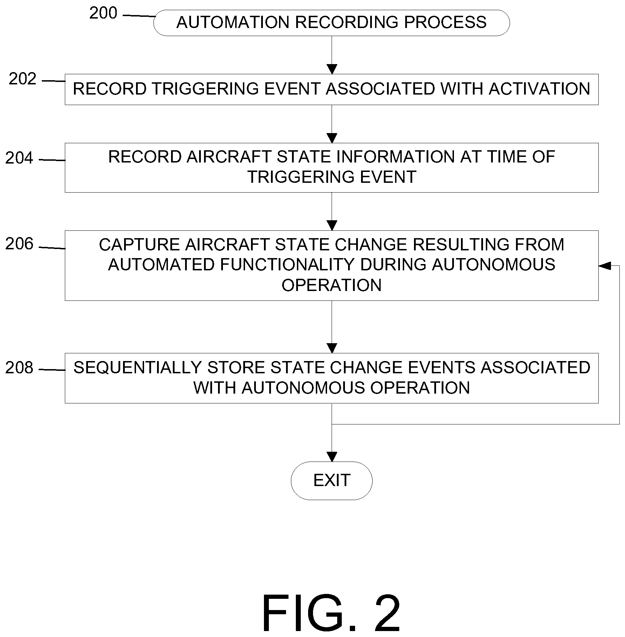

FIG. 2 depicts an exemplary embodiment of an automation recording process 200 suitable for implementation by the aircraft system 100 to capture events associated with the activation and operation of automated functionality that was automatically triggered to autonomously operate the aircraft 120 in response to a potential incapacitation condition or another anomalous condition associated with a pilot, co-pilot or other aircraft operator. The various tasks performed in connection with the illustrated process may be implemented using hardware, firmware, software executed by processing circuitry, or any combination thereof. For illustrative purposes, the following description may refer to elements mentioned above in connection with FIG. 1. In practice, portions of the automation recording process 200 may be performed by different elements of a vehicle system. That said, exemplary embodiments are described herein in the context of the automation recording process 200 being primarily performed by an automation summarization service implemented at the processing system 106 and/or the display system 108. It should be appreciated that the automation recording process 200 may include any number of additional or alternative tasks, the tasks need not be performed in the illustrated order and/or the tasks may be performed concurrently, and/or the automation recording process 200 may be incorporated into a more comprehensive procedure or process having additional functionality not described in detail herein. Moreover, one or more of the tasks shown and described in the context of FIG. 2 could be omitted from a practical embodiment of the automation recording process 200 as long as the intended overall functionality remains intact.

Referring to FIG. 2 with continued reference to FIG. 1, in exemplary embodiments, the automation recording process 200 is automatically triggered in response to the activation of the autoland functionality associated with the FMS 114 or other onboard avionics system 116 that provides fully autonomous and automatic configuration of the aircraft for landing in response to detecting an incapacity condition. In this regard, in exemplary implementations, the automation recording process 200 initially captures or otherwise records information identifying or otherwise indicative of the particular type of triggering event associated with the activation of the automated functionality and the contemporaneous aircraft state information or other data characterizing the operational context at the time of the triggering event (task 202, 204). In this regard, an automation summarization service implemented at the processing system 106 may receive or otherwise obtain from the FMS 114 or other onboard avionics system 116 signals or other data indicative of the particular type of incapacity condition or other anomalous condition that corresponds to the triggering event for activating the autoland functionality with a corresponding timestamp value representing the time at which the triggering event occurred. In response to receiving indicia of autoland activation and/or an autoland activation triggering event, the automation summarization service at the processing system 106 may automatically query one or more of the navigation system 112, the FMS 114 and/or other avionics system(s) 116 to obtain current data values for various operating parameters that characterizes the operational context associated with the triggering event at the time of the autoland activation, such as, for example, the current geographic location of the aircraft 120 at the time of the autoland activation, the current altitude of the aircraft 120 at the time of the autoland activation, the current speed of the aircraft 120 at the time of the autoland activation, the current configuration of the aircraft 120 at the time of the autoland activation, the current flight phase at the time of the autoland activation, and/or the like. The automation summarization service tags or otherwise timestamps the aircraft state information to facilitate storing or otherwise maintaining the aircraft state information at the time of autoland activation in association with the respective triggering event associated with the autoland activation.

Still referring to FIG. 2, during autonomous operation in accordance with the automated functionality, the automation recording process 200 automatically records status data from one or more onboard systems during operation in accordance with the automated functionality in a time ordered sequence for a period of time at or after the activation of the automated functionality. In the illustrated embodiment, the automation recording process 200 continually captures or otherwise records any aircraft state change resulting from the automated functionality during autonomous operation and stores or otherwise maintains the aircraft state changes associated with the autonomous operation in a time ordered sequence (tasks 206, 208). In this regard, the automation summarization service at the processing system 106 may continually monitor the output of one or more avionics systems 112, 114, 116 for data, signals or other indicia of an operationally relevant state change and correspondingly record or otherwise maintain indicia of that aircraft state change in association with a timestamp or other contextual data associated with that aircraft, resulting in a time ordered sequence of aircraft state changes during the autonomous operation.

For example, after activation of the autoland functionality, the automation summarization service at the processing system 106 monitor the avionics systems 112, 114, 116 to detect or otherwise identify when the autoland functionality initiates or otherwise performs an aircraft configuration change (e.g., flap extension, landing gear deployment, airbrake operation, spoiler modulation, and/or the like) and record or otherwise maintain indicia of that aircraft configuration change in association with the timestamp value and the current position of the aircraft 120 at the time of the aircraft configuration change (e.g., the current geographic location and/or altitude). The automation summarization service may also capture or otherwise record a change in the flight phase, an event or action associated with a communications system 110 (e.g., tuning a transponder, sending and/or receiving a datalink communication, etc.), resolution advisories or other events associated with a collision avoidance system, and/or the like. Additionally, in exemplary implementations, the automation summarization service at the processing system 106 captures or otherwise records data or information associated with the aircraft 120 traversing a particular navigational reference point or waypoint associated with an aircraft procedure, a flight plan, or other route for the aircraft 120 in association with a corresponding timestamp value and potentially other information characterizing the current state or configuration of the aircraft 120 when traversing that waypoint (e.g., the altitude, speed, aircraft configuration and/or the like upon reaching that waypoint). In this manner, the automation summarization service captures and records operationally significant actions, events or other changes likely to be relevant to the pilot, copilot or other aircraft operator that resulted from the autoland functionality autonomously operating the aircraft. The loop defined by tasks 206 and 208 may repeat indefinitely while the autoland functionality is active and autonomously operating the aircraft 120 to allow the automation summarization service at the processing system 106 to capture and construct a corresponding time ordered sequence of operationally relevant aircraft state changes associated with the autonomous operation of the aircraft 120 by the autoland functionality throughout the time period or duration that the autoland functionality is active. The time ordered sequence of aircraft state changes allows for the actions by the autoland functionality to be temporally reconstructed in the same order in which the respective state changes occurred.

It should be noted that although FIG. 2 is described in the context of the automation recording process 200 being implemented or performed concurrently to the autoland functionality operating the aircraft 120, in other implementations, the automation recording process 200 may be triggered or otherwise performed in response to the autoland functionality being deactivated. In such implementations, the automation summarization service at the processing system 106 may retrieve or otherwise obtain recorded aircraft status data from one or more onboard recording devices or systems, such as, for example, a flight data recorder (FDR), a cockpit voice and data recorder (CVDR), an onboard maintenance or diagnostic system, and/or the like, to retrospectively capture and create a time ordered sequence of aircraft status data that summarizes the autonomous operation performed by the autoland functionality.

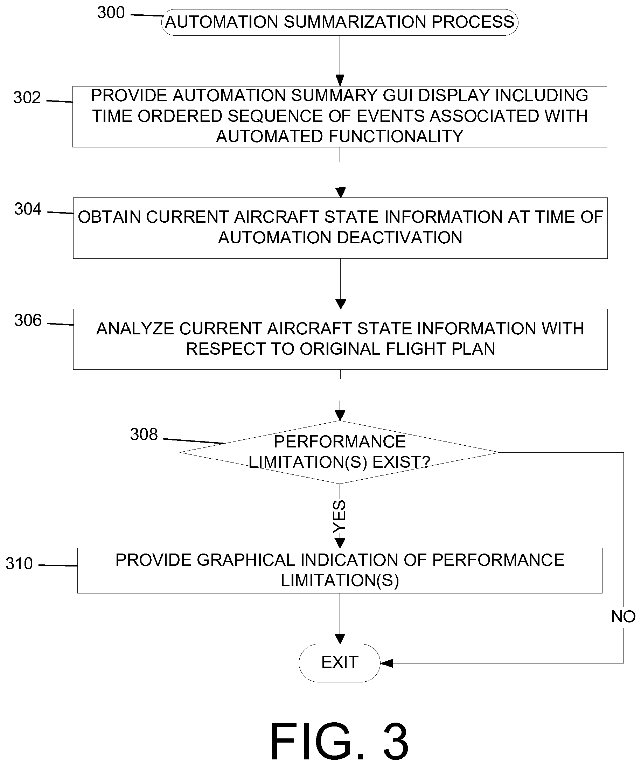

FIG. 3 depicts an exemplary embodiment of an automation summarization process 300 suitable for implementation by an automation summarization service associated with the aircraft system 100 to provide an automation summary GUI display that includes graphical indicia of the aircraft state changes during operation in accordance with the automated functionality using a time ordered sequence of the aircraft status data recorded via the automation recording process 200 of FIG. 2. The various tasks performed in connection with the illustrated process may be implemented using hardware, firmware, software executed by processing circuitry, or any combination thereof. For illustrative purposes, the following description may refer to elements mentioned above in connection with FIGS. 1-2. In practice, portions of the automation summarization process 300 may be performed by different elements of a vehicle system. That said, exemplary embodiments are described herein in the context of the automation summarization process 300 being primarily performed by an automation summarization service implemented at the processing system 106 and/or the display system 108. It should be appreciated that the automation summarization process 300 may include any number of additional or alternative tasks, the tasks need not be performed in the illustrated order and/or the tasks may be performed concurrently, and/or the automation summarization process 300 may be incorporated into a more comprehensive procedure or process having additional functionality not described in detail herein. Moreover, one or more of the tasks shown and described in the context of FIG. 3 could be omitted from a practical embodiment of the automation summarization process 300 as long as the intended overall functionality remains intact.

In one or more exemplary implementations, the automation summarization process 300 is automatically initiated or otherwise performed by the automation summarization service at the processing system 106 in response to deactivation of automated functionality to provide an automation summary GUI display with graphical indicia providing situational awareness with respect to events associated with the automated functionality during autonomous operation. For example, the automation summarization service may automatically initiate the automation summarization process 300 in response to receiving a signal or other indicia from the FMS 114 or other onboard avionics system 116 that the autoland functionality has been deactivated. In practice, the autoland functionality may be manually deactivated by a pilot, copilot or other human aircraft operator, however, it should be appreciated that the subject matter described herein is not limited to any particular manner or sequence for deactivating the autoland functionality.

In exemplary implementations, the automation summarization process 300 automatically generates or otherwise provides an automation summary GUI display that includes graphical representations or other graphical indicia of the aircraft state changes and other operationally relevant events associated with the autoland functionality in a time ordered or sequential manner (task 302). For example, in some implementations, the automation summarization service may provide an automation summary GUI display that includes a time ordered list of the operationally relevant aircraft state changes starting with a graphical representation or indication of the triggering event associated with the activation of the autoland functionality followed by the subsequent aircraft state changes in a time ordered manner using the timestamps associated with the respective aircraft changes. In other implementations, the automation summarization service generate an automation summary GUI display in a navigational map format that includes graphical representations or indicia of the aircraft state changes in relation to the original flight plan that accurately conveys the relative timing of the aircraft state changes in a geospatial context, as described in greater detail below.

The automation summarization process 300 also receives or otherwise obtains data or information characterizing the current aircraft state at the time of deactivation of the automated functionality and analyzes the current aircraft state information with respect to the original flight plan preceding the activation of the automated functionality to detect, identify or otherwise determine whether one or more performance limitations exist with respect to operating the aircraft in accordance with the original flight plan (tasks 304, 306, 308). When a performance limitation associated with the original flight plan exists, the automation summarization process 300 automatically provides a graphical indication of the performance limitation on the automation summarization GUI display in connection with the time ordered sequence of aircraft state changes (task 310). In this manner, the automation summarization process 300 provides improved situational awareness with respect to the capability of the aircraft 120 to be operated in the originally planned manner or otherwise returning to the original flight plan while also providing situational awareness with respect to the preceding events or state changes associated with the autoland functionality that may be responsible for inhibiting or otherwise limiting the performance of the aircraft 120.

For example, based on the current aircraft state information (e.g., the geographic location, altitude, speed, heading, aircraft drag configuration, aircraft engine status, fuel remaining, and/or the like) and the current meteorological conditions, the automation summarization service may calculate or otherwise determine whether the aircraft 120 remains capable of resuming the original flight plan or otherwise returning to landing at the original destination airport associated with the original flight plan preceding the autoland activation (e.g., by determining whether the aircraft 120 has adequate fuel remaining to reach the originally planned destination airport from the current location and altitude while satisfying altitude, speed, and/or other stabilization criteria associated with a final approach fix for the originally planned destination airport). When the automation summarization service determines the aircraft 120 can no longer reach the original destination airport or otherwise return to the original flight plan, the automation summarization service automatically provides graphical indicia of the performance limitation on the automation summarization GUI display to provide pilot or other aircraft operator with situational awareness that the original destination airport is no longer an option for landing the aircraft 120. In exemplary implementations, the automation summarization service may also analyze the current aircraft state information with respect to one or more criteria for a particular mode of operation of the aircraft 120. For example, the FMS 114 or other avionics system 116 may utilize one or more logic rules or criteria that must be satisfied in order for a particular mode of operation of the aircraft 120, with the automation summarization service applying the various mode entry rules or logic to the current aircraft state information to identify or otherwise determine whether the aircraft 120 is limited to a particular subset of operating modes. In this regard, the automation summarization service may determine whether or not manual operation of the aircraft 120 can be resumed or restored, for example, based on the current aircraft altitude, the current distance to go to the current destination airport and/or the like. Thus, if the autoland functionality is deactivated too close to the selected airport for landing by the autoland functionality or at an altitude and/or speed that limits operational capability of the aircraft 120, the automation summarization service may provide corresponding notification to the pilot, copilot or other human aircraft operator of the performance limitations associated with the aircraft 120.

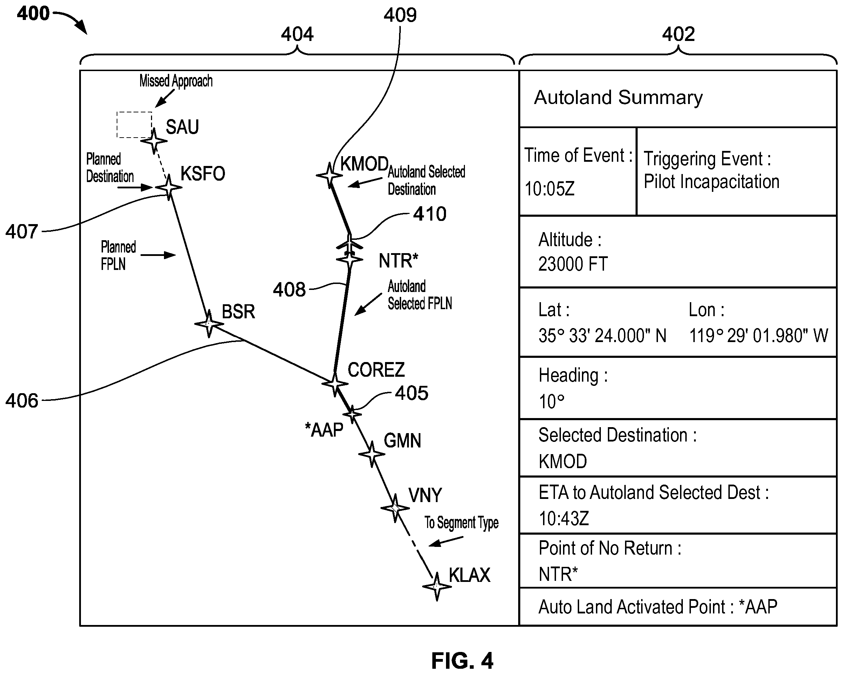

FIG. 4 depicts an exemplary automation summary GUI display 400 in a navigational map format that includes an automation summary display region 402 and a navigational map region 404 that are concurrently displayed. The automation summary display region 402 may be realized as a distinct window, panel or other region of the automation summary GUI display 400 where the automation summarization service displays, renders or otherwise provides textual information or other graphical indicia pertaining to one or more events associated with the automated functionality from the time ordered sequence of automation events recorded during the automation recording process 200. For example, in the illustrated implementation, the automation summary display region 402 includes text characterizing the type of triggering event associated with activation of the autoland functionality (e.g., pilot incapacitation), the time or timestamp value associated with the triggering event (e.g., 10:05Z), the contemporaneous altitude (e.g., 23000 feet) and geographic location (e.g., latitude and longitude coordinates) at the time of the triggering event, and/or the like. The automation summary display region 402 also includes information identifying one or more aircraft state changes resulting from the autoland functionality (e.g., the autoland functionality selecting an alternative destination airport KMOD, the aircraft traversing a point of no return where the aircraft is unable to rejoin the original flight plan, etc.). Accordingly, in various implementations, the automation summary display region 402 may include a listing of the recorded automation events associated with the autoland functionality arranged in a time ordered manner to allow the pilot, copilot or other operator to ascertain and reconstruct the sequence of actions or operations performed by the autoland functionality. In this regard, in some implementations, the automation summary display region 402 may include a listing of only those recorded automation events associated with the autoland functionality and exclude any other events that are not initiated by, triggered by, or otherwise associated with the autoland functionality.

The navigational map region 404 includes a graphical representation 406 of a route corresponding to an original flight plan for the aircraft 120 to an original destination airport 407 along with a graphical representation 408 of an alternate route corresponding to an alternative flight plan generated by the autoland functionality for landing at an autoland selected destination airport 409 instead of the original destination airport 407. The navigational map region 404 also includes a graphical representation 405 of a point along the route 406 corresponding to the original flight plan for the aircraft 120 corresponding to the geographic location where the autoland functionality was automatically activated. For example, in response to activation of the autoland functionality, the automation summarization service may automatically create or otherwise define a pseudo waypoint at the geographic location and/or altitude of the aircraft 120 at the time of the autoland activation and assign the pseudo waypoint an autoland activation point identifier (e.g., *AAP) to facilitate rendering of the autoland activation point 405. In this regard, FIG. 4 depicts a scenario where the alternate autoland flight plan route 408 overlaps at least a portion of the original flight plan route 406 until reaching the next waypoint (COREZ) ahead of the autoland activation point 405, at which point the alternate autoland flight plan route 408 deviates from the original flight plan route 406 en route to the autoland selected destination airport 409.

The automation summarization service also generates or otherwise provides a graphical representation 410 of the aircraft 120 on the navigational map region 404 at a location along the autoland flight plan route 408 corresponding to the current geographic location of the aircraft 120. In this regard, the aircraft symbology 410 is rendered along the autoland flight plan route 408 ahead of the autoland activation point 405 and any waypoints or other navigational reference points associated with the alternate autoland flight plan route 408 that were previously traversed by the aircraft 120 to convey the time ordered sequence of waypoints traversed by the aircraft 120 by the autoland functionality, while concurrently providing visual differentiation between the original flight plan route 406 and the autoland flight plan route 408 that was generated by the autoland functionality. In this regard, the autoland flight plan route 408 may be rendered using a color or other visually distinguishable characteristic that is different from the color or visually distinguishable characteristic utilized to render the original flight plan route 406.

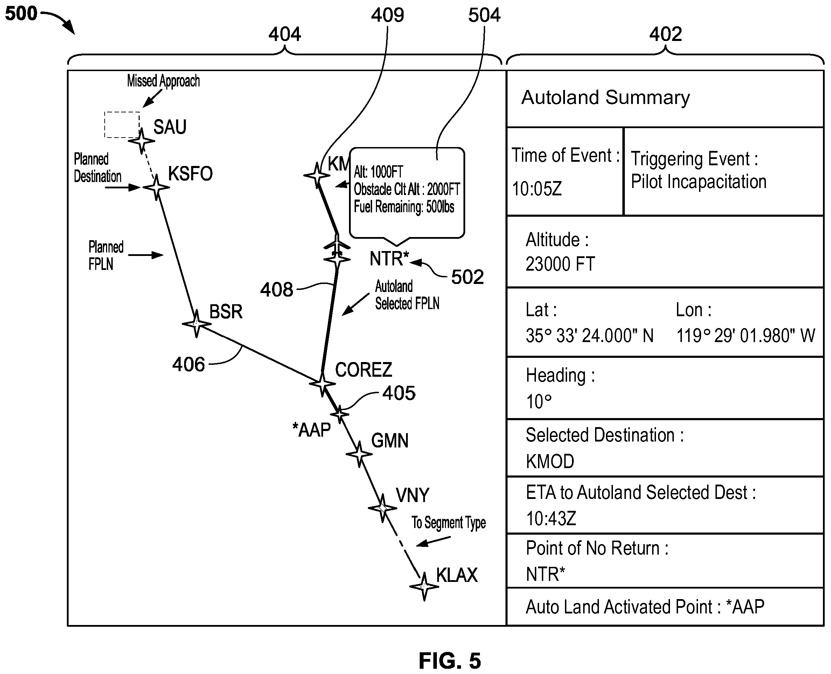

Referring to FIG. 5, with continued reference to FIGS. 1-4, as described above, in one or more exemplary embodiments, the automation summarization service analyzes the current aircraft status information at the time of deactivation of the autoland functionality to detect or otherwise identify when a performance limitation associated with the original flight plan route 406 exists, and in response, automatically updates the automation summary GUI display 400 to include graphical indicia of the performance limitation(s). In this regard, FIG. 5 depicts an automation summary GUI display 500 that includes a graphical indication 502 that the aircraft 120 has traversed past a point of no return along the autoland flight plan route 408, at which point the aircraft 120 is incapable of returning to the original destination airport 407 and/or the original flight plan route 406. As shown, the point of no return graphical indication 502 may be selectable by a pilot, copilot or other user to cause the automation summarization service to provide a pop-up window 504 that includes textual information characterizing the performance limitations of the aircraft 120 or otherwise explaining the reasons why the aircraft 120 is unable to return to the original flight plan route 406 (e.g., the current altitude of the aircraft 120 is below a threshold or otherwise too low to clear an obstacle associated with returning to the original flight plan route, the current amount of fuel remaining onboard the aircraft 120 is below a threshold or otherwise insufficient to reach the originally planned destination airport based on the current state of the aircraft 120, and/or the like).

It should be noted that although FIGS. 4-5 depict static images, in practice, the automation summarization service may be configurable to generate an automation summary GUI display that incorporates video playback, animation, collages, or other features to convey the operationally relevant aircraft state changes attributable to the autoland functionality in a time ordered manner once a pilot, copilot or other human user resumes operation of the aircraft. Accordingly, the subject matter described herein is not intended to be limited to any particular manner of presentation of a time ordered sequence of automation events.

To briefly summarize, by virtue of the subject matter described herein, when a pilot recovers from an incapacitated state or other medical condition, or wakes up from resting or sleeping (e.g., for a long haul flight), the automation summarization service provides an automation summary GUI display that summarizes the actions performed by the automated functionality and other operationally significant or relevant aircraft state changes that have already occurred in a time ordered manner that provides situational awareness with respect to the behavior of the automated functionality to facilitate more informed decision making with respect to the pilot resuming manual operation of the aircraft. In this regard, the automation summary GUI display may provide information identifying the triggering event activating the automated functionality or that otherwise provided the reason for modifying operation of the aircraft, while also providing visual differentiation between flight plans or otherwise conveys the manner in which the flight plan was changed relative to the original flight plan prior to activation of the automated functionality. Additionally, the automation summary GUI display may provide guidance or other indicia when one or more performance limitations exist that limit the ability of the aircraft to resume the original flight plan or otherwise limit manual operation of the aircraft given the current aircraft state. Thus, a pilot recovering from an incapacitated state or who might otherwise be disorientated with respect to the current operation of the aircraft can be familiarized with the current aircraft state to improve the pilot's situational awareness and capability of flying the aircraft and landing safely.

For the sake of brevity, conventional techniques related to avionics systems, FMSs, flight planning, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of non-transitory storage medium known in the art. An exemplary storage medium is coupled to the processor such that the processor can read information from, and write information to, the storage medium. In the alternative, the storage medium may be integral to the processor. The processor and the storage medium may reside in an ASIC.

The subject matter may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is logically coherent.

Furthermore, the foregoing description may refer to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. For example, two elements may be coupled to each other physically, electronically, logically, or in any other manner, through one or more additional elements. Thus, although the drawings may depict one exemplary arrangement of elements directly connected to one another, additional intervening elements, devices, features, or components may be present in an embodiment of the depicted subject matter. In addition, certain terminology may also be used herein for the purpose of reference only, and thus are not intended to be limiting.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method of assisting operation of a vehicle, the method comprising:
in response to activation of an automated functionality associated with the vehicle, automatically recording vehicle status data from one or more systems onboard the vehicle during operation of the vehicle in accordance with the automated functionality in a time ordered sequence for a period of time after the activation of the automated functionality; and
automatically generating an automation summary graphical user interface (GUI) display comprising the time ordered sequence of the vehicle status data in response to deactivation of the automated functionality.

2. The method of claim 1, wherein the automation summary GUI display comprises a graphical indication of a difference between a modified route for the vehicle associated with the automated functionality and a planned route for the vehicle prior to the activation of the automated functionality.

3. The method of claim 1, further comprising providing a graphical indication of a triggering event associated with the activation of the automated functionality on the automation summary GUI display.

4. The method of claim 1, further comprising providing a graphical indication of a geographic location associated with the activation of the automated functionality on the automation summary GUI display.

5. The method of claim 1, further comprising providing graphical indicia of one or more navigational reference points traversed by the vehicle during the activation of the automated functionality on the automation summary GUI display.

6. The method of claim 1, further comprising:
determining a performance limitation associated with operation of the vehicle at a time of the deactivation of the automated functionality based at least in part on a subset of the vehicle status data corresponding to the time of the deactivation; and
providing a graphical indication of the performance limitation on the automation summary GUI display.

7. The method of claim 6, wherein determining the performance limitation comprises determining an inability of the vehicle to reach an original destination associated with a planned route of travel for the vehicle.

8. The method of claim 6, wherein determining the performance limitation comprises determining an inability to resume manual operation of the vehicle.

9. A computer-readable medium having computer-executable instructions stored thereon that, when executed by a processing system, cause the processing system to:
automatically record vehicle status data from one or more systems onboard a vehicle during operation of the vehicle in accordance with an automated functionality associated with the vehicle in response to activation of the automated functionality, resulting in recorded vehicle status data in a time ordered sequence for a period of time after the activation of the automated functionality; and
automatically generate an automation summary graphical user interface (GUI) display comprising the time ordered sequence of the recorded vehicle status data in response to deactivation of the automated functionality.

10. The computer-readable medium of claim 9, wherein the automation summary GUI display comprises a graphical indication of a difference between a modified route for the vehicle associated with the automated functionality and a planned route for the vehicle prior to the activation of the automated functionality.

11. The computer-readable medium of claim 10, wherein the graphical indication of the difference comprises a graphical representation of an alternate destination for the vehicle selected by the automated functionality.

12. The computer-readable medium of claim 9, wherein the vehicle comprises an aircraft and the automated functionality comprises an autoland functionality.

13. The computer-readable medium of claim 12, wherein the automation summary GUI display comprises a graphical indication of a triggering event associated with the activation of the autoland functionality.

14. The computer-readable medium of claim 9, wherein the automation summary GUI display comprises a navigational map region including a first graphical representation of an original route for the vehicle and a second graphical representation of a modified route for the vehicle.

15. An aircraft system comprising:
a flight management system (FMS) to provide autoland functionality for an aircraft;
one or more systems onboard the aircraft to provide status data associated with the aircraft;
a display device; and
a processing system coupled to the display device, the FMS and the one or more systems to provide an automation summarization service configurable to:
automatically record the status data from the one or more systems onboard the aircraft during operation of the aircraft in accordance with the autoland functionality in a time ordered sequence for a period of time after activation of the autoland functionality in response to the activation of the autoland functionality; and
automatically generate an automation summary graphical user interface (GUI) display on the display device in response to deactivation of the autoland functionality, wherein the automation summary GUI display comprises a graphical indication of one or more automation events corresponding to the time ordered sequence of the status data.
